(19) Europäisches Patentamt
European Patent Office
Office européen des brevets

(11) **EP 4 357 760 A1**

(12) **EUROPÄISCHE PATENTANMELDUNG**

(43) Veröffentlichungstag:
   **24.04.2024  Patentblatt 2024/17**

(21) Anmeldenummer: **23201739.2**

(22) Anmeldetag: **05.10.2023**

(51) Internationale Patentklassifikation (IPC):
   **G01N 21/33** *(2006.01)*        **G01N 21/84** *(2006.01)*
   **G01N 21/90** *(2006.01)*

(52) Gemeinsame Patentklassifikation (CPC):
   **G01N 21/9081; G01N 21/33; G01N 21/8422;**
   G01N 2201/06133; G01N 2201/0626;
   G01N 2201/0634; G01N 2201/064

(84) Benannte Vertragsstaaten:
   **AL AT BE BG CH CY CZ DE DK EE ES FI FR GB
   GR HR HU IE IS IT LI LT LU LV MC ME MK MT NL
   NO PL PT RO RS SE SI SK SM TR**
   Benannte Erstreckungsstaaten:
   **BA**
   Benannte Validierungsstaaten:
   **KH MA MD TN**

(30) Priorität: **20.10.2022  DE 102022127755
   14.12.2022  DE 102022133227**

(71) Anmelder: **INTRAVIS Gesellschaft für ..... mbH
   genaue Angaben gemäß beigefügter Eingabe
   52068 Aachen (DE)**

(72) Erfinder: **Dr. Fuhrmann, Gerd
   52066 Aachen (DE)**

(74) Vertreter: **Kohlmann, Kai
   Donatusstraße 1
   52078 Aachen (DE)**

(54) **VERFAHREN UND VORRICHTUNG ZUM PRÜFEN EINER GASBARRIERESCHICHT EINES HOHLKÖRPERS**

(57)    Die Erfindung betrifft ein Verfahren zum Prüfen von mit einer Gasbarriereschicht versehenen Hohlkörpern sowie eine im Vergleich zum Stand der Technik kostengünstigere Vorrichtung zur Durchführung des Verfahrens. Die übereinstimmenden zu prüfenden Hohlkörper bestehen aus mindestens einer Gasbarriereschicht und mindestens einer weiteren Schicht aus Kunststoff bestehen, wobei die Transmission der mindestens einen Gasbarriereschicht für UV-Strahlung insbesondere im UV-A Spektrum deutlich geringer als die Transmission der mindestens einen weiteren Schicht für diese UV-Strahlung ist. Von jedem zu prüfenden Hohlkörper wird ein Abbild mit einer digitalen Kamera mit einem UV-Durchlassfilter aufgenommen, die zumindest im Spektrum der UV-Strahlung empfindlich ist. Bei der Verarbeitung des Abbildes werden Fehler in der Gasbarriereschicht unter Berücksichtigung der unterschiedlichen Transmission der mindestens einen Gasbarriereschicht und der mindestens einen weiteren Schicht des Hohlkörpers in dem UV- oder UV-A Spektrum ermittelt.

Fig. 1

EP 4 357 760 A1

Processed by Luminess, 75001 PARIS (FR)

**Beschreibung**

Die Erfindung betrifft ein Verfahren und eine Vorrichtung zum Prüfen von Hohlkörpern mit mehreren Schichten, der aus mindestens einer Gasbarriereschicht und mindestens einer weiteren Schicht aus Kunststoff besteht.

Unter Permeation versteht man den Vorgang, bei dem ein Stoff einen Festkörper durchdringt oder durchwandert. Permeation von Wasserdampf und Gasen bei Kunststoffen ist u.a. von Interesse für Verpackungen, Behälter und Sperrschichten. Der Permeationskoeffizient P beschreibt den Permeationsprozess. Dabei ist der Permeationskoeffizient durch die Gleichung

$$Q = P * F * t * \Delta p/d$$

definiert.

Q bedeutet die Gas- bzw. Dampfmenge, die in der Zeit t durch eine Schicht der Fläche F mit der Dicke d permiert, wenn der Druckunterschied des Permeenten vor und hinter der Schicht $\Delta p$ beträgt.

Als Kunststoffe für die Herstellung von Hohlkörpern, insbesondere Behältern zur Verwendung in der Nahrungsmittelindustrie und der Medizintechnik, eignen sich insbesondere Polypropylen (PP) oder Polyethylen (PE), wobei auch Materialien, wie zum Beispiel PET (Polyethylenterephthalat), verwendet werden können. Vielfach ist es erforderlich die in dem Hohlköper aufzubewahrenden Substanzen, wie beispielweise verderbliche Lebensmittel oder medizinische Proben, vor einem Kontakt mit Sauerstoff aus der Umgebungsluft zu schützen. Die herkömmlichen Polymere für die Herstellung von Hohlkörpern können diesen Schutz aufgrund der hohen Wasserdampf- und Gasdurchlässigkeit nicht bieten, wie sich dies aus der nachfolgenden Tabelle ergibt:

| Permeationskoeffizienten von verschiedenen Polymeren | | | | | |
|---|---|---|---|---|---|
| Gas<br>Rohrwerkstoff | $O_2$<br>Sauerstoff | $N_2$<br>Stickstoff | $H_2$<br>Wasserstoff | $CO_2$<br>Kohlendioxid | $H_2O$<br>Wasserdampf |
| PE | 8 - 19 | 2-6 | 25-55 | 32-75 | 0,5 – 1,5 |
| PP | 5 | 5 | 65 | 14 | 1,1 |
| PVC | 0.4 | 0,04 | 10 | 0,9 | 6,5 |
| PVDF | 0.7 | 0,2 | 3 | < 1,0 | 5.2 |
| Wasserdampfdurchlässigkeit in g/ ($m^2$ * d) | | | | | |
| Gasdurchlässigkeit in $cm^3$ / ($m^2$ * d * bar) | | | | | |

Die Hohlkörper, insbesondere Verpackungen und Behälter aus Kunststoff, weisen daher für bestimmte Anwendungsfälle eine Gasbarriereschicht aus Kunststoff auf, die gegenüber den vorgenannten Polymeren keine oder eine sehr geringfügige Durchlässigkeit für Gase und Wasserdampf aufweist.

Für Verpackungen und Behälter aus Kunststoff, bei denen einen hohe Gasbarriere erforderlich ist, ist mittlerweile Ethylen-Vinyl Alkohol-Copolymer (EVOH) als Gasbarriereschicht am häufigsten vertreten. Ethylen-Vinylalkohol-Copolymer (EVOH) ist ein Kunststoffmaterial mit hervorragenden Gasbarriere-Eigenschaften. Zudem sind EVOH-Copolymere gegen Öle und organische Lösungsmittel widerstandsfähig und können zudem sehr einfach auf andere Kunststoffe aufgebracht werden, mit welchem sie einen festen Verbund bilden. Diese vorteilhaften Eigenschaften haben dazu geführt, EVOH für Gasbarriereschichten für Verpackungen und Behälter nicht nur im Bereich der Lebensmittelindustrie, sondern auch im Bereich der Medizintechnik, der Pharmazie und der kosmetischen Industrie zu verwenden.

Allerdings darf für eine zuverlässigen Schutz des Inhalts des Hohlkörpers die Gasbarriereschicht keinerlei Lücken oder Fehler aufweisen, so daß es nicht nur auf das Vorhandensein der Gasbarriereschicht, sondern auf deren Lücken- und Fehlerlosigkeit sowie ausreichende Schichtdicke ankommt. Lücken in der Gasbarriereschicht können dazu führen, dass Gase oder Dämpfe in den verschlossenen Hohlkörper bzw. Behälter gelangen können.

Insbesondere auch im Bereich der Medizintechnik ist die Lücken- und Fehlerlosigkeit der Gasbarriereschicht von Probenröhrchen für den Transport und die kurzfristige Lagerung von Proben, beispielsweise von Blut oder Urin, von besonderer Bedeutung. Diese Proberöhrchen werden aus transparentem Kunststoff gefertigt und sind an der Spitze mit einem Verschluss oder im Fall von Blutprobenröhrchen mit einem speziellen Anschluss ausgestattet, um die Blutprobe durch Aspiration oder Unterdruck aufzunehmen.

Es besteht daher ein Bedürfnis Prüfverfahren zu schaffen, mit welchen das Vorhandensein bzw. Fehler einer Gasbarriereschicht in Hohlkörpern im industriellen Maße geprüft werden können.

Hohlkörper mit und ohne EVOH-Schichten können optisch im Normalfall nicht unterschieden werden, wodurch ein Prüfen mit Hilfe von klassischen optischen Inspektionsverfahren nicht möglich ist.

Aus der EP 2 605 004 A1 ist bereits ein Verfahren zum Prüfen von mit einer Gasbarriereschicht versehenen Gegenständen bekannt, welche aus mindestens einer Grundschicht aus Polypropylen und/oder Polyethylen und mindestens einer Gasbarriereschicht aus Ethylenvinylacetat (EVA) und/oder Ethylen-Vinylalkohol-Copolymer (EVOH) bestehen. Eine Fördereinrichtung führt die Gegenstände mit einer Fördergeschwindigkeit von 80 m/min kontinuierlich vor einem Bildaufnahmemodul vorbei, wobei durch das Bildaufnahmemodul das Abbild jedes Gegenstandes im Bereich des unsichtbaren Lichtes gemacht wird, indem das Bildaufnahmemodul eine im Bereich der Infrarotstrahlung zwischen 2,5 $\mu$m und 5,1 $\mu$m arbeitende, gekühlte Infrarotkamera mit einer thermischen Auflösung von <20 mK ist, die ein Abbild jedes Gegenstandes mit einer Belichtungszeit von etwa 0,4 ms oder kürzer macht. Das aufgenommene Abbild wird durch ein Verarbeitungsmodul auf das Vorhandensein, das Fehlen oder die Dicke sowie Unregelmäßigkeiten innerhalb der Gasbarriereschicht untersucht. Bei der Untersuchung entdeckte fehlerhafte Gegenstände werden mittels eines Aussonderungsmoduls ausgeschieden. Die mit einer Gasbarriereschicht versehenen Gegenstände werden einer Bildprüfung im Bereich der unsichtbaren Infrarotstrahlung unterzogen, wodurch die im Bereich der Infrarotstrahlung erkennbaren, aber bei sichtbarem Licht nicht auffindbaren Fehler in der Gasbarriereschicht entdeckt werden können.

Diesem Vorteil des bekannten Verfahrens stehen als Nachteile sehr hohe Anschaffungs- und Betriebskosten einer gekühlten Infrarotkamera sowie die mitunter lange Anlaufzeit, bis das System den Detektor auf Betriebstemperatur herunter gekühlt hat, gegenüber. Hinzu kommt, dass die Kühleinheit der gekühlten Infrarotkamera nach etwa 1500 Betriebsstunden getauscht werden muss. Die Verwendung ungekühlter Infrarotkameras kommt zur Prüfung der Gasbarriereschicht im industriellen Maßstab bei hohen Prüfraten wegen der nicht ausreichenden Bildqualität nicht in Betracht.

Es ist daher Aufgabe der Erfindung, ein Verfahren zum Prüfen von mit einer Gasbarriereschicht versehenen Hohlkörpern sowie eine Vorrichtung zur Durchführung des Verfahrens anzugeben, bei welchen die Kostennachteile des bekannten Verfahrens und Systems nicht bestehen, jedoch auch bei massenhafter Prüfung von Hohlkörpern eine ausreichende Bildqualität für eine zuverlässige Prüfung gewährleistet ist.

Diese Aufgabe wird durch ein Verfahren mit den Merkmalen des unabhängigen Anspruchs 1 sowie eine Vorrichtung mit den Merkmalen des unabhängigen Anspruchs 10 gelöst. Vorteilhafte Ausgestaltungen der Erfindung ergeben sich aus den Merkmalen der abhängigen Ansprüche.

Die übereinstimmenden zu prüfenden Hohlkörper mit mehreren transparenten Schichten bestehen aus mindestens einer Gasbarriereschicht und mindestens einer weiteren Schicht aus Kunststoff. In der Regel ist die mindestens eine Gasbarriereschicht zwischen zwei weiteren Schichten eingebettet. Die Transmission der mindestens einen Gasbarriereschicht für UV-Strahlung in einem Spektrum von 400 bis 100 nm, insbesondere jedoch im UV-A Spektrum von 400 bis 315 nm, ist geringer als die Transmission der mindestens einen weiteren Schicht für diese UV-Strahlung. Die vorgenannten Voraussetzungen erfüllen Hohlkörper mit Schichten aus Basis-Polymeren und Gasbarriereschichten, wie sie in der Lebensmittelindustrie und der Medizintechnik üblicherweise eingesetzt werden. Bei diesen Hohlkörpern besteht die Gasbarriereschicht in der Regel aus Ethylen-Vinylacetat (EVA) und/oder Ethylen-Vinylalkohol-Copolymer (EVOH) und jede weitere Schicht aus einem Basis-Polymer aus der Gruppe Polypropylen (PP), Polyethylenterephthalat (PET) oder Polyethylen (PE).

Die Transmission beschreibt die Durchlässigkeit der Schichten für die elektromagnetische Strahlung in dem eingestrahlten Spektrum der UV-Strahlung. Der Transmissionsgrad ist eine Materialeigenschaft und definiert als der Quotient zwischen der Strahlungsintensität hinter und der Intensität vor den Schichten des Hohlkörpers. Der Transmissionsgrad ist somit ein Maß für "durchgelassene" Intensität und nimmt Werte zwischen 0 und 100% an. Der Transmissionsgrad hängt damit u.a. ab von

- der Dicke der durchstrahlten weiteren Schicht(en) des Hohlkörpers bzw. der Dicke der durchstrahlten Gasbarriereschicht(en)
- der Wellenlänge der elektromagnetischen Strahlung, die die Schichten des Hohlkörpers durchstrahlt
- vom Einfallswinkel der einstrahlenden elektromagnetischen Strahlung.

Spektrale Transmissionsmessungen an den transparenten Materialien der Hohlkörper werden beispielsweise gemäß der DIN 5036-3:1979-11 "Strahlungsphysikalische und lichttechnische Eigenschaften von Materialien; Meßverfahren für lichttechnische und spektrale strahlungsphysikalische Kennzahlen" durchgeführt.

Um eine gleichmäßige Beleuchtung des Hohlkörpers bei der Prüfung zu gewährleisten, trifft die UV-Strahlung der Strahlungsquelle zunächst auf einen Diffusor, der diffuse UV-Strahlung abstrahlt. Die Strahlungsquelle ist insbesondere ein UV Flächenstrahler, vorzugsweise UV-LED Flächenstrahler. UV-LED Flächenstrahler kombinieren eine hohe UV-Bestrahlungsstärke mit einer großflächigen und gleichmäßigen Bestrahlung des Diffusors.

Die zu prüfenden Hohlkörper werden aufeinanderfolgend in das Sichtfeld der digitalen Kamera eingebracht, wobei der Hohlkörper zumindest während der Aufnahme des Abbilds von der diffusen UV-Strahlung bestrahlt wird. Der Diffusor und die Strahlungsquelle werden derart angeordnet, dass nach Möglichkeit keine nicht gestreute UV-Strahlung der Strahlungsquelle auf den zu prüfenden Hohlkörper auftrifft.

Da die Gasbarriereschicht des Hohlkörpers eine deutlich geringere Transmission als die weiteren Schichten aufweist, bewirkt ein Fehler in der Gasbarriereschicht, insbesondere ein teilweises Fehlen der Gasbarriereschicht oder eine bereichsweise zu dünn ausgebildete Gasbarriereschicht einen Intensitätssprung der an den fehlerhaften Stellen durchgelassenen UV-Strahlung. Dieser Intensitätssprung zeigt sich bei den üblichen Kunststoffmaterialien der Hohlkörper besonders deutlich, wenn die eingestrahlte, gestreute UV-Strahlung im UV-A Spektrum liegt.

Als digitale Kamera für das Aufnehmen eines Abbildes von jedem in das Sichtfeld der Kamera eingebrachten Hohlkörpers können in vorteilhafter Ausgestaltung der Erfindung monochrome Kameras verwendet werden. Monochrome Industriekameras für die industrielle Bildverarbeitung sind preiswert verfügbar, schnell und zuverlässig; sie sind mit rauscharmen CMOS- oder CCD-Sensoren ausgestattet. Die Auflösung reicht beispielsweise von 720 x 540 mit 0,4 Megapixeln bis 5472 x 3648 mit 20 Megapixeln. Die verfügbaren Auflösungen und Leistungen dieser Industriekameras sind ausreichend, um bei der massenhaften, industriellen Prüfung der Hohlkörper die bei Fehlern auftretenden Intensitätssprünge bei der Verarbeitung des Abbilds von jedem Hohlkörper mit der Verarbeitungseinheit zu detektieren. Die Kostennachteile der gekühlten Infrarotkameras werden bei einer für die Prüfung der Gasbarriereschicht ausreichenden Bildqualität vermieden.

Dem Objektiv der Kamera ist ein für die UV-Strahlung durchlässiger optischer Filter vorgeschaltet. Das Bestrahlen der zu prüfenden Hohlkörper mit der diffusen UV-Strahlung kann aufgrund von Zuschlagstoffen in den Kunststoffmaterialien ein Eigenleuchten, insbesondere im Blau-Grün-Bereich, anregen. Um dieses Spektrum der Strahlung bei der Aufnahme des Abbilds auszuschließen und auch das Umgebungslicht zu reduzieren, ist dem Objektiv der Kamera der lediglich für die gewünschte UV-Strahlung, insbesondere lediglich für UV-Strahlung im UV-A Bereich durchlässige optische Filter vorgeschaltet.

Vorzugsweise ist die Transmission der mindestens einen Gasbarriereschicht für die eingestrahlte UV-Strahlung mindestens um den Faktor fünf, vorzugsweise um den Faktor zehn, geringer als die Transmission der mindestens einen weiteren Schicht für die eingestrahlte UV-Strahlung. Selbst wenn der Hohlkörper eine Gasbarriereschicht aufweist, die sich zwischen zwei weiteren Schichten aus transparentem Kunststoff befindet, wird durch eine derart große Differenz im Transmissionsgrad der Schichten des Hohlkörpers sichergestellt, dass ein Fehler in der Gasbarriereschicht in dem Abbild des Hohlkörpers stets zuverlässig erkennbar ist.

Um einen hohen Durchsatz bei der Prüfung der Hohlkörper zu gewährleisten, ist die Handhabungseinrichtung der Vorrichtung in einer Ausgestaltung der Erfindung eingerichtet, die Hohlkörper durch das Sichtfeld der Kamera kontinuierlich zu fördern. Als Handhabungseinrichtungen in Betracht kommen abhängig von den zu prüfenden Hohlkörpern beispielsweise ein Überkopfförderband mit Vakuumansaugung der Hohlkörper oder ein Förderband mit Halterungen für die Hohlkörper. Denkbar ist jedoch auch ein kontinuierliches Einbringen der Hohlkörper in das Sichtfeld der Kamera im freien Fall, beispielsweise mit Hilfe eines oberhalb des Sichtfeldes der Kamera angeordneten Abwurfbandes. Abhängig von der Geschwindigkeit der kontinuierlichen Bewegung der zu prüfenden Hohlkörper während der Aufnahme des Abbildes muss die Belichtungszeit der Kamera entsprechend kurz, beispielsweise kleiner 0,4 ms, vorzugsweise kleiner 0,1 ms sein.

Eine hohe Prüfgenauigkeit wird in einer Ausgestaltung der Erfindung erreicht, wenn die Hohlkörper getaktet in das Sichtfeld der Kamera eingebracht werden. Das getaktete Einbringen erlaubt das Aufnehmen des Abbilds wenn der Hohlkörper nicht in Bewegung ist. Hierdurch lassen sich längere Belichtungszeiten realisieren, was bei Prüfungen mit geringerem Massendurchsatz von Vorteil sein kann.

Als Handhabungseinrichtungen für das getaktete Einbringen kommen zum Beispiel Pick-and-Place-Systeme, Industrieroboter oder Rundtakttische zum Einsatz.

Mit der Handhabungseinrichtung werden die Hohlkörper in dem Sichtfeld der Kamera in eine definierte räumliche Lage gebracht, die beim getakteten Einbringen für eine begrenzte Zeit aufrechterhalten wird. Die Bewegungen der Handhabungseinrichtungen sind programmgesteuert und auf die Verarbeitung der Abbilder der Hohlkörper mit der Verarbeitungseinheit zeitlich abgestimmt.

In einer ersten Ausgestaltung der Erfindung ist der Diffusor eine Streuscheibe. Die Streuscheibe ist im Strahlengang zwischen der Strahlungsquelle und dem Objektiv der Kamera angeordnet. Die Größe der Streuscheibe und deren Abstand zu dem Objektiv der Kamera wird so gewählt, dass sich im Sichtbereich der Kamera ausschließlich die Streuscheibe befindet. Die Handhabungseinrichtung bringt den Hohlkörper in den Zwischenraum zwischen der Streuscheibe und dem Objektiv ein, sodass der gesamte Hintergrund des aufgenommenen Abbildes diffus beleuchtet ist. Gegenüberliegende Wandungen des Hohlkörpers liegen dabei im Sichtfeld der Kamera, d. h. die Vorrichtung durchstrahlt den zu prüfenden Hohlkörper linear.

In einer zweiten Ausgestaltung der Erfindung ist der Diffusor ein Reflektor, eingerichtet die von der Strahlungsquelle eingestrahlte UV-Strahlung diffus zu reflektieren. Der Reflektor wird derart angeordnet, dass die diffus reflektierte UV-Strahlung in Richtung des Sichtfeldes der Kamera reflektiert wird, in das jeder zu prüfende Hohlkörper mittels der Handhabungseinrichtung eingebracht wird. Die Hohlkörper werden in einer vorteilhaften Ausgestaltung des Verfahrens derart in das Sichtfeld der Kamera eingebracht, dass lediglich eine Wandung des Hohlkörpers im Sichtfeld der Kamera liegt, beispielsweise indem die Kamera über eine stirnseitige Öffnung des Hohlkörpers unter einem spitzen Winkel auf die Innenwand des Hohlkörpers blickt. Die diffuse UV-Strahlung fällt indes auf den zu prüfenden Hohlkörper von der Außenseite ein.

Das aufgenommene Abbild enthält abweichend zu der linearen Anordnung lediglich die Kunststoffschichten einer Wandung des Hohlkörpers. Hierdurch wird die Erkennung von Fehlern in der Gasbarriereschicht verbessert. Eine vollständige Prüfung der Gasbarriereschicht des Hohlkörpers erfordert jedoch das Aufnehmen einer größeren Anzahl von Abbildern des Hohlkörpers aus unterschiedlichen Blickrichtungen als bei der linearen Durchstrahlung. Das Aufnehmen von Abbildern aus unterschiedlichen Blickrichtungen kann beispielsweise durch aufeinanderfolgendes Einbringen in verschiedene Kamerastationen der Vorrichtung oder durch Drehen des Hohlkörpers und wiederholtes Aufnehmen von Abbildern in ein und derselben Kamerastation erfolgen.

Die Verwendung eines Reflektors als Diffusor ist darüber hinaus vorteilhaft, wenn in der Prüfumgebung kein ausreichender Bauraum für eine lineare Anordnung vorhanden ist. Der Reflektor ist beispielsweise als Platte ausgestaltet.

Nachfolgend wird die Erfindung anhand der Figuren näher erläutert. Es zeigen

**Figur 1** eine schematische Darstellung eines ersten Ausführungsbeispiels einer Vorrichtung zur Durchführung des erfindungsgemäßen Verfahrens sowie

**Figur 2** eine schematische Darstellung eines zweiten Ausführungsbeispiels einer Vorrichtung zur Durchführung des erfindungsgemäßen Verfahrens.

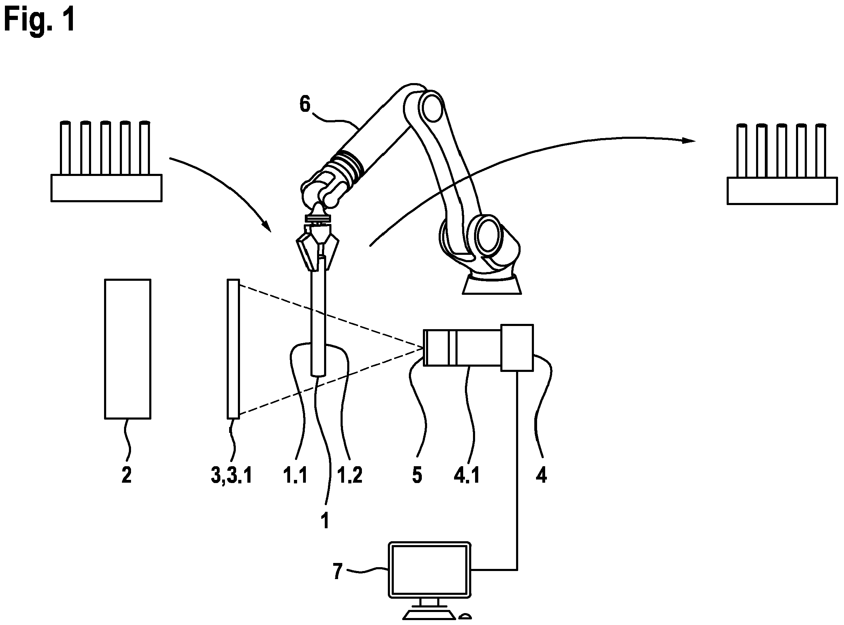

Figur 1 zeigt eine erste Vorrichtung zum Prüfen von Hohlkörpern 1 mit mehreren transparenten Schichten. Die Vorrichtung umfasst als wesentliche Komponenten eine Strahlungsquelle 2 in Form eines UV LED-Flächenstrahlers, eingerichtet zum Erzeugen einer UV-Strahlung in einem Spektrum von 400nm - 100nm, wobei die Strahlungsquelle 2 auf einen Diffusor 3, im Ausführungsbeispiel nach Figur 1 in Form einer Streuscheibe 3.1 ausgerichtet ist.

Die von der Strahlungsquelle 2 auf die Streuscheibe 3.1 eingestrahlte UV-Strahlung wird als diffuse UV-Strahlung auf der der Strahlungsquelle 2 abgewandten Seite der Streuscheibe 3.1 abgestrahlt. Eine Kamera 4, im Ausführungsbeispiel eine monochrome Industriekamera, ist eingerichtet, zum Aufnehmen eines Abbildes von jedem aufeinanderfolgend in das Sichtfeld der Kamera eingebrachten Hohlkörper 1, wobei die Kamera 4 zumindest im Spektrum der UV-Strahlung empfindlich ist. Dem Objektiv 4.1 der Kamera 4 ist ein für die UV-Strahlung durchlässiger optischer Filter 5, auch als Durchlassfilter bezeichnet, vorgeschaltet. Der Filter 5 ist vor dem Objektiv 4.1 durch Aufschrauben angebracht. Der Durchlassfilter lässt nur UV-Strahlung in einem gewünschten UV-Spektrum durch. In dem Ausführungsbeispiel UV-Strahlung mit einer Wellenlänge im UV-A-Bereich von 400nm - 315nm.

Außerdem weist die Vorrichtung eine Handhabungseinrichtung 6 auf, die zum aufeinanderfolgenden Einbringen der zu prüfenden Hohlkörper 1 in das Sichtfeld der Kamera 4 eingerichtet ist, wobei der eingebrachte Hohlkörper 1 derart zwischen der Streuscheibe 3.1 und der Kamera 4 angeordnet ist, dass dieser ausschließlich von der diffusen UV-Strahlung, die von der Streuscheibe 3.1 abgestrahlt wird, beleuchtet wird. Diese Beleuchtung kann ein Eigenleuchten der zu prüfenden Hohlkörper 1 im Blau-Grün-Bereich anregen. Der Filter 5 schließt dieses Spektrum aus und reduziert zugleich Umgebungslicht in der Abbildung.

Die digitale Kamera 4 ist darüber hinaus mit einer Verarbeitungseinheit 7 verbunden, die derart programmiert ist, das aufgenommene Abbild von jedem zu prüfenden Hohlkörper 1 derart zu verarbeiten, dass Fehler in der Gasbarriereschicht unter Berücksichtigung der unterschiedlichen Transmission der mindestens einen Gasbarriereschicht und der mindestens einen weiteren Schicht des Hohlkörpers 1 ermittelt werden. Die Verarbeitungseinheit 7 kann in einer nicht dargestellten Ausgestaltung der Erfindung mit einer Aussonderungsvorrichtung verbunden sein, die abhängig von der Ermittlung eines Fehlers in der Gasbarriereschicht automatisiert fehlerhafte Hohlkörper aussortiert. Derartige Aussonderungsvorrichtungen, die als fehlerhaft erkannte Prüfobjekte, beispielsweise mechanisch oder mittels eines Luftdruckstoßes aussortieren, sind dem hier zuständigen Fachmann geläufig.

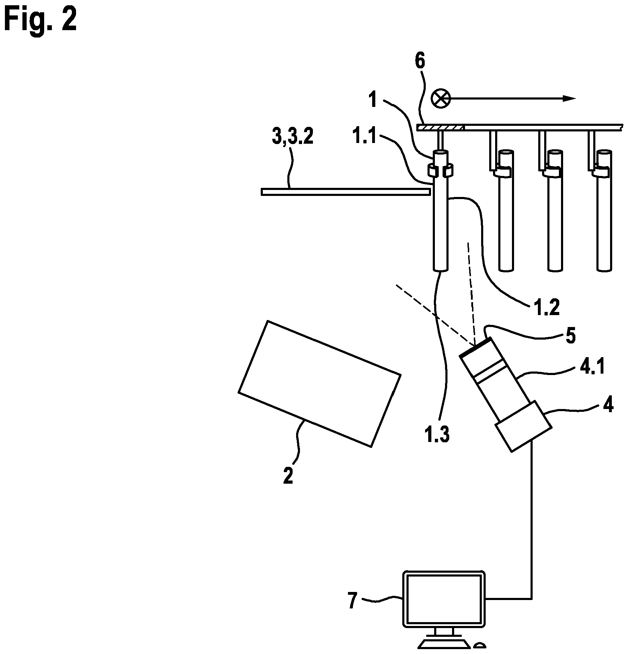

Bei der lediglich schematisch angedeuteten Handhabungseinrichtung 6 kann es sich beispielsweise um einen Industrieroboter handeln, der die zu prüfenden Hohlkörper 1 getaktet in das Sichtfeld der Kamera 4 einbringt. Während der Aufnahme des Abbilds des Hohlkörpers 1 wird dieser für eine begrenzte Zeit nicht bewegt. Alternativ kann die Handhabungseinrichtung 6 jedoch auch derart eingerichtet sein, dass die Hohlkörper durch das Sichtfeld der Kamera kontinuierlich gefördert werden. Eine solche Handhabungseinrichtung ist schematisch in dem Ausführungsbeispiel nach Figur 2 dargestellt. Hierdurch kann ein höherer Durchsatz bei der Prüfung der Hohlkörper 1 erreicht werden, was jedoch eine kürzere Belichtungszeit der Kamera 4 erfordert.

Wie aus der Figur 1 erkennbar, ist die Streuscheibe 3.1 im Strahlengang zwischen der Strahlungsquelle 2 und dem Objektiv 4.1 der Kamera 4 angeordnet. Die Größe der Streuscheibe 3.1 und deren Abstand zu dem Objektiv 4.1 der Kamera 4 ist so gewählt, dass sich im Sichtbereich der Kamera ausschließlich die Streuscheibe 4.1 sowie der dazwischen befindliche, zu prüfende Hohlkörper 1 befindet. Der gesamte Hintergrund des aufgenommenen Abbildes ist daher diffus von der Streuscheibe 3.1 beleuchtet. Gegenüberliegende Wandungen 1.1, 1.2 des Hohlkörpers 1 liegen dabei im Sichtfeld der Kamera 4, das heißt, die Vorrichtung durchstrahlt den zu prüfenden Hohlkörper 1 linear.

In einer zweiten, in Figur 2 dargestellten Ausführungsform der Erfindung ist der Diffusor 3 als plattenförmiger Reflektor 3.2 ausgestaltet, eingerichtet die von der Strahlungsquelle 2 eingestrahlte UV-Strahlung diffus zu reflektieren. Die diffuse Reflektion an der Oberfläche des Reflektors 3.2 wird durch eine Rauheit der Oberfläche bewirkt, die beispielsweise aus gebürstetem Aluminium bestehen kann. Der Reflektor 3.2 ist oberhalb der Strahlungsquelle 2 und der Kamera 4 derart angeordnet, dass die diffus reflektierte UV-Strahlung in Richtung des Sichtfelds der unter einem spitzen Winkel zur horizontalen ausgerichteten Kamera 4 reflektiert wird.

In das Sichtfeld der Kamera 4 wird jeder zu prüfende Hohlkörper mittels der Handhabungseinrichtung 6 derart eingebracht, dass lediglich eine Wandung 1.1 des Hohlkörpers 1 im Sichtfeld der Kamera 4 liegt; die Kamera 4 blickt über die stirnseitige Öffnung 1.3 des Hohlkörpers 1 auf die Innenseite der Wandung 1.1 des Hohlkörpers 1. Die von dem Reflektor 3.2 reflektierte diffuse UV-Strahlung, fällt von der Außenseite auf die Wandung 1.1 des zu prüfenden Hohlkörpers 1 ein.

Die schematisch in Figur 2 dargestellte Handhabungseinrichtung 6 fördert die zu prüfenden Hohlkörper kontinuierlich, senkrecht zur Bildebene entlang dem Seitenrand des plattenförmigen Reflektors 3.2. Die Handhabungseinrichtung kann jedoch, wie im Ausführungsbeispiel nach Figur 1, als Industrie-Roboter ausgestaltet sein und die zu prüfenden Hohlkörper 1 getaktet in das Sichtfeld der Kamera 4 einbringen.

**Bezugszeichenliste**

| 1 | Hohlkörper |
|---|---|
| 1.1 | Wandung |
| 1.2 | Wandung |
| 1.3 | Öffnung |
| 2 | Strahlungsquelle |
| 3 | Diffusor |
| 3.1 | Streuscheibe |
| 3.2 | Reflektor |
| 4 | Kamera |
| 4.1 | Objektiv |
| 5 | Filter |
| 6 | Handhabungseinrichtung |
| 7 | Verarbeitungseinheit |

**Patentansprüche**

1.   Verfahren zum Prüfen von Hohlkörpern (1) mit mehreren transparenten Schichten, die jeweils aus mindestens einer Gasbarriereschicht und mindestens einer weiteren Schicht aus Kunststoff bestehen, wobei die Transmission der mindestens einen Gasbarriereschicht für UV-Strahlung in einem Spektrum von 400 bis 100 nm geringer als die Transmission der mindestens einen weiteren Schicht für diese UV-Strahlung ist, umfassend die Schritte

- Erzeugen der UV-Strahlung in einem Spektrum von 400 bis 100 nm mit einer Strahlungsquelle (2),
- Einstrahlen der UV-Strahlung auf einen Diffusor (3), der diffuse UV-Strahlung abstrahlt,
- aufeinanderfolgendes Einbringen der zu prüfenden Hohlkörper (1) in das Sichtfeld einer digitalen Kamera (4), wobei jeder Hohlkörper(1) von der diffusen UV-Strahlung beleuchtet wird,
- Aufnehmen eines Abbildes von jedem in das Sichtfeld eingebrachten Hohlkörper (1) mit der Kamera (4), wobei die Kamera (4) zumindest im Spektrum der UV-Strahlung empfindlich ist und einen dem Objektiv (4.1) der Kamera (4) vorgeschalteten, für UV-Strahlung durchlässigen optischen Filter (5) aufweist,
- Verarbeiten des Abbildes von jedem Hohlkörper (1) mit einer Verarbeitungseinheit (7) derart, dass Fehler in der Gasbarriereschicht unter Berücksichtigung der unterschiedlichen Transmission der mindestens einen Gasbarriereschicht und der mindestens einen weiteren Schicht des Hohlkörpers (1) ermittelt werden.

2. Verfahren nach Anspruch 1, **dadurch gekennzeichnet, dass** die Transmission der mindestens einen Gasbarriereschicht für UV-Strahlung mindestens um den Faktor fünf geringer als die Transmission der mindestens einen weiteren Schicht für die UV-Strahlung ist.

3. Verfahren nach Anspruch 1 oder 2, **dadurch gekennzeichnet, dass** die Transmission der mindestens einen Gasbarriereschicht für UV-Strahlung in einem Spektrum von 400 bis 315 nm geringer als die Transmission der mindestens einen weiteren Schicht für die UV-Strahlung in diesem Spektrum ist.

4. Verfahren nach einem der Ansprüche 1 bis 3, **dadurch gekennzeichnet, dass** die Gasbarriereschicht aus Ethylen-Vinylacetat (EVA) und/oder Ethylen-Vinylalkohol-Copolymer (EVOH) besteht.

5. Verfahren nach einem der Ansprüche 1 bis 4, **dadurch gekennzeichnet, dass** jede weitere Schicht aus einem Polymer aus der Gruppe Polypropylen (PP), Polyethylenterephthalat (PET), Polyethylen(PE) besteht.

6. Verfahren nach einem der Ansprüche 1 bis 5, **dadurch gekennzeichnet, dass** die Hohlkörper (1) durch das Sichtfeld der Kamera (4) kontinuierlich gefördert werden.

7. Verfahren nach einem der Ansprüche 1 bis 5, **dadurch gekennzeichnet, dass** die Hohlkörper (1) getaktet in das Sichtfeld der Kamera (4) eingebracht werden.

8. Verfahren nach einem der Ansprüche 1 bis 7, **dadurch gekennzeichnet, dass** die Hohlkörper (1) derart in das Sichtfeld der Kamera (4) eingebracht werden, dass gegenüberliegende Wandungen (1.1,1.2) jedes Hohlkörpers (1) im Sichtfeld der Kamera liegen.

9. Verfahren nach einem der Ansprüche 1 bis 7, **dadurch gekennzeichnet, dass** die Hohlkörper (1) derart in das Sichtfeld der Kamera (4) eingebracht werden, dass lediglich eine Wandung (1.1) des Hohlkörpers (1) im Sichtfeld der Kamera liegt.

10. Vorrichtung zum Prüfen von Hohlkörpern (1) mit mehreren transparenten Schichten, die jeweils aus mindestens einer Gasbarriereschicht und mindestens einer weiteren Schicht aus Kunststoff bestehen, wobei die Transmission der mindestens einen Gasbarriereschicht für UV-Strahlung in einem Spektrum von 400 nm bis 100 nm geringer als die Transmission der mindestens einen weiteren Schicht für die UV-Strahlung in diesem Spektrum ist, umfassend

- eine Strahlungsquelle (2) eingerichtet zum Erzeugen der UV-Strahlung in einem Spektrum von 400 nm bis 100 nm, wobei die Strahlungsquelle (2) auf einen Diffusor (3) ausgerichtet ist, der die eingestrahlte UV-Strahlung streut und diffuse UV-Strahlung abstrahlt,
- eine digitale Kamera (4) eingerichtet zum Aufnehmen eines Abbildes von jedem in das Sichtfeld der Kamera (4) eingebrachten Hohlkörper (1), wobei die Kamera (4) zumindest im Spektrum der UV-Strahlung empfindlich ist,
- einen dem Objektiv (4.1) der Kamera (4) vorgeschalteten, für UV-Strahlung durchlässigen optischen Filter (5),
- eine Handhabungseinrichtung (6), eingerichtet zum aufeinanderfolgenden Einbringen der zu prüfenden Hohlkörper(1) in das Sichtfeld der Kamera (4), wobei jeder Hohlkörper (1) von der diffusen UV-Strahlung bestrahlt wird,
- eine Verarbeitungseinheit (7), die programmiert ist, das aufgenommene Abbild von jedem Hohlkörper (1) derart zu verarbeiten, dass Fehler in der Gasbarriereschicht unter Berücksichtigung der unterschiedlichen Transmission der mindestens einen Gasbarriereschicht und der mindestens einen weiteren Schicht des Hohlkörpers (1) ermittelt werden.

11. Vorrichtung nach Anspruch 10, **dadurch gekennzeichnet, dass** die Vorrichtung die zu prüfenden Hohlkörper (1) umfasst, wobei die Transmission der mindestens einen Gasbarriereschicht für die UV-Strahlung mindestens um den Faktor fünf geringer als die Transmission der mindestens einen weiteren Schicht für die UV-Strahlung der Hohlkörper ist.

12. Vorrichtung nach Anspruch 10 oder 11, **dadurch gekennzeichnet, dass** die Vorrichtung die zu prüfenden Hohlkörper (1) umfasst und die Transmission der mindestens einen Gasbarriereschicht für die UV-Strahlung in einem Spektrum von 400 bis 315 nm geringer als die Transmission der mindestens einen weiteren Schicht für die UV-Strahlung in diesem Spektrum ist.

13. Vorrichtung nach einem der Ansprüche 10 bis 12, **dadurch gekennzeichnet, dass** die Strahlungsquelle (2) zum Erzeugen der UV-Strahlung in einem Spektrum von 400 bis 315 nm eingerichtet ist.

14. Vorrichtung nach einem der Ansprüche 10 bis 13, **dadurch gekennzeichnet, dass** die Vorrichtung die zu prüfenden Hohlkörper (1) umfasst und die Gasbarriereschicht aus Ethylen-Vinylacetat (EVA) und/oder Ethylen-Vinylalkohol-Copolymer (EVOH) besteht.

15. Vorrichtung nach einem der Ansprüche 10 bis 14, **dadurch gekennzeichnet, dass** die Vorrichtung die zu prüfenden Hohlkörper (1) umfasst und jede weitere Schicht aus einem Polymer aus der Gruppe Polypropylen (PP), Polyethylenterephthalat (PET), Polyethylen (PE) besteht.

16. Vorrichtung nach einem der Ansprüche 10 bis 15, **dadurch gekennzeichnet, dass** die Handhabungseinrichtung (6) eingerichtet ist, die Hohlkörper (1) durch das Sichtfeld der Kamera (4) kontinuierlich zu fördern.

17. Vorrichtung nach einem der Ansprüche 10 bis 15, **dadurch gekennzeichnet, dass** die Handhabungseinrichtung (6) eingerichtet ist, die Hohlkörper (1) in das Sichtfeld der Kamera getaktet einzubringen.

18. Vorrichtung nach einem der Ansprüche 10 bis 17, **dadurch gekennzeichnet, dass** der Diffusor (3) eine Streuscheibe (3.1) umfasst.

19. Vorrichtung nach einem der Ansprüche 10 bis 17, **dadurch gekennzeichnet, dass** die Streuscheibe (3.1) im Strahlengang zwischen der Strahlungsquelle (2) und dem Objektiv (4.1) der Kamera (4) angeordnet ist.

20. Vorrichtung nach einem der Ansprüche 10 bis 17, **dadurch gekennzeichnet, dass** der Diffusor (3) ein Reflektor (3.2) ist, eingerichtet eingestrahlte UV-Strahlung diffus zu reflektieren.

21. Vorrichtung nach einem der Ansprüche 10 bis 20, **dadurch gekennzeichnet, dass** die Kamera (4) eine digitale Monochromkamera ist.

22. Vorrichtung nach einem der Ansprüche 10 bis 21, **dadurch gekennzeichnet, dass** der Filter (5) für Strahlung in einem Wellenlängenbereich des Spektrums von 400 nm bis 315 nm durchlässig ist.

Fig. 1

Fig. 2

EP 4 357 760 A1

Europäisches
Patentamt

European
Patent Office

Office européen
des brevets

**EUROPÄISCHER RECHERCHENBERICHT**

Nummer der Anmeldung

**EP 23 20 1739**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2011 169735 A (KUREHA CORP; IP SYSTEM KK) 1. September 2011 (2011-09-01) | 1-5, 10-15 | INV. G01N21/33 |
| Y | * Titel * <br> * Zusammenfassung * <br> * Absätze [0008], [0013] - [0015], [0025] - [0031], [0038], [0042] * <br> * Anspruch 1 * <br> * Abbildungen 1-3 * <br> ----- | 4,6-9, 14,16-22 | G01N21/84 G01N21/90 |
| X,D | EP 2 605 004 A1 (FINATEC HOLDING AG [CH]) 19. Juni 2013 (2013-06-19) | 1-17 | |
| Y | * Absätze [0002], [0011], [0014], [0022], [0029], [0031] * <br> * Anspruch 1 * <br> * Abbildungen 1-4 * <br> ----- | 4,6-9, 14,16-22 | |
| X | JP 2004 085471 A (MITSUBISHI HEAVY IND LTD) 18. März 2004 (2004-03-18) | 1-3,5, 10-13, 15,18-22 | |
| Y | * Zusammenfassung * <br> * Absätze [0023], [0056] - [0060] * <br> * Abbildungen 1,2,7 * <br> ----- | 4,6-9, 14,16-22 | **RECHERCHIERTE SACHGEBIETE (IPC)** <br><br> G01N |
| A | OYANE A ET AL: "Laser-assisted calcium phosphate deposition on polymer substrates in supersaturated solutions", RSC ADVANCES, Bd. 4, Nr. 96, 2014, Seiten 53645-53648, XP093139985, GB ISSN: 2046-2069, DOI: 10.1039/C4RA09313E * Abbildung 1 * <br> ----- | 2,3 | |

Der vorliegende Recherchenbericht wurde für alle Patentansprüche erstellt

| Recherchenort | Abschlußdatum der Recherche | Prüfer |
|---|---|---|
| **München** | **12. März 2024** | **Witte, Thomas** |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 20 1739

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-03-2024

| Im Recherchenbericht angeführtes Patentdokument | Datum der Veröffentlichung | Mitglied(er) der Patentfamilie | Datum der Veröffentlichung |
|---|---|---|---|
| JP 2011169735 A | 01-09-2011 | KEINE | |
| EP 2605004 A1 | 19-06-2013 | CA 2859157 A1 | 20-06-2013 |
| | | CN 104011535 A | 27-08-2014 |
| | | EP 2453225 A2 | 16-05-2012 |
| | | EP 2605004 A1 | 19-06-2013 |
| | | ES 2539466 T3 | 01-07-2015 |
| | | US 2015049182 A1 | 19-02-2015 |
| | | WO 2013087762 A1 | 20-06-2013 |
| JP 2004085471 A | 18-03-2004 | JP 3643821 B2 | 27-04-2005 |
| | | JP 2004085471 A | 18-03-2004 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2605004 A1